# EUROPEAN PATENT SPECIFICATION

(11) **EP 2 732 887 B1**
(45) Date of publication and mention of the grant of the patent: **15.07.2015**
(21) Application number: 12192732.1
(22) Date of filing: 15.11.2012
(51) Int. Cl.: B09B 3/00, F23G 5/00, F23G 5/20, F23J 15/02

(54) **Process for treating heavy ash or slag in general**
Verfahren zur Behandlung von schwerer Asche oder Schlacke im Allgemeinen
Procédé pour traiter des cendres lourdes ou de scories en général

(43) Date of publication of application: 21.05.2014
(73) Proprietor: S.VE.D.A. S.R.L. Società Veneta Depuratori e Affini, 31057 Venezia (IT)
(72) Inventor: Zambelli, Alessio, 31057 Silea (IT); Boschi, Giorgio, 35122 Padova (IT)
(74) Representative: Piovesana, Paolo

(56) References cited:
- EP-A1- 2 071 237
- WO-A1-2009/024882
- JP-A- 8 268 737
- JP-A- 2005 246 225

## Description

The present invention relates to a process for treating heavy ash or slag in general.

The heavy ash or slag which separates from the bottom of the combustion chamber of incineration plants is known to represent 20-25% of the urban solid waste incinerated.

Said slag has a great recovery potential due to the presence of ferrous material (6-10%), of non-ferrous metals (in particular aluminium 1-2%) and of calcium, magnesium and iron silico-aluminates.

The matrix is very similar to that of eruptive rocks such as basalts or granites but with higher concentrations of metals.

A low density scoriaceous phase and a vitreous phase are found in them.

Current slag treatment comprises natural carbonation by exposure to air in heaps of suitable geometry for a period of at least six months until a pH of between 9 and 10 is obtained.

The CO₂ naturally present in air reacts with the oxides and hydroxides present in the slag to give rise to carbonates and water.

Although fresh slag has a great recovery potential, it currently suffers from a series of criticalities which prevent its recovery and disposal at low cost.

Slag presents four particular criticalities:
- extreme pH: it has a pH between 11.5 and 13 and because of this characteristic is classified as a dangerous waste by being corrosive and irritant,
- ecotoxicity: due to the high concentration of zinc oxide (eco toxic substance),
- presence of soluble salts: it contains soluble salts (chlorides, sulphates) which prevent it being destined for recovery,
- high emission of heavy metals and anions: they have a higher level of heavy metal and anion emission than the limits fixed by EU regulations for disposal of non-dangerous waste in waste dumps.

WO2009/0248826 A1 uses a water/solid ratio less than 0.5:1. With this ratio, carbonation of slag in the presence of water stops at the first layer of material as calcium carbonate forms, blocking CO₂ access to the underlying part of the slag. The material obtained is in the form of hardened aggregated balls. Patent Abstract of Japan 2005246225 discloses a process for recovering of ca-component from fly ash whereby the ash is cleassed which blowing CO₂ in it.

An object of the invention is to treat slag in such a manner as to obtain thorough and virtually complete slag carbonation and an energetic wash thereof.

Another object of the invention is to achieve nearly total reutilization of the slag.

These objects are attained according to the invention by a process for treating heavy ash or slag as described in claim 1.

A preferred embodiment of the present invention is further clarified hereinafter by way of non-limiting example with reference to the accompanying description of the process according to the invention.

The process according to the invention consists of feeding the ash and a water quantity into a continuously rotating drum in a weight ratio between 0.8 and 2, preferably 1, and of passing into the drum a flow of gaseous CO₂ in a concentration between 90 and 100% v/v originating from the offgases leaving the incinerator stack.

As a result of the drum rotation, the CO₂, which dissolves in water, easily reaches all the basic substances, with which it reacts, aided and accelerated in this by the grinding and mixing action performed by the vitreous inert component present in the slag.

This extensive disgregation, together with the presence of water and the continuous mixing due to the reaction of the drum, means that after a mixing period of about 1-2 hours virtually complete carbonation of the slag is obtained.

On termination of this period the material, in the form of water and slag of different particle sizes, is made to pass through a mechanical screen with mesh dimensions of about 5 mm to obtain a separation of coarse slag particles of size greater than 5 mm from a water/slag mixture of size less than 5 mm.

The coarse slag fraction, after being subjected to deferrization treatment, is fed to a temporary store. The water/slag mixture of size less than 5 mm is subjected to further mechanical screening steps until a water/slag phase of size less than 1 mm is obtained. This phase is presented as an easily sedimentable sludge separable from the water, hence the separation between the two phases can be obtained by static sedimentation, but preferably by mechanical filtration (preferably a filter press, a belt press or a centrifuge).

The water leaving the filter press is treated in a chemico-physical purifier, and the presence of antimony therein would advise the introduction of a treatment step with added FeSO₄ and/or Na₂S at about pH 6 followed by clariflocculation at about pH 8.5 followed by sand, activated carbon and ion exchange resin filtration.

When dried the solid part, i.e. the sludge, is presence as a very fine uniform powder and is characterised by emission values less than the tolerability limits fixed by the European Community for the disposal of non-dangerous waste.

The products obtained by the treatment are:
- 10% of reusable ferrous and non-ferrous (aluminium) material. The material is presented washed, free from contaminants other than that separated on the untreated slag, normally always dirt and hardly marketable,
- 30% of inert vitreous material (> 5mm), reusable as an inert consisting of glass fractions from bottles and containers and glass from slag (total or partial fusion of silicates), as inert ceramic materials. The material is presented washed and free from contaminants,
- 30% of fine sand (< 1 mm) of pH between 6.5 and 11.5, reusable in the cement industry. The material has a low salt content and a modest water content. The emission satisfies the limits fixed by the EU for dump disposal for non-dangerous waste.

From the aforesaid it is clear that the process of the invention enables the aforestated drawbacks to be eliminated, and in particular:
- the pH falls to values between 8.5 and 10.5; it follows that the waste loses the danger characteristic in that it is non longer corrosive and irritant;
- the carbonation converts the oxides into carbonates (in particular, zinc carbonate is not ecotoxic);
- the soluble contaminants and salts are removed by water;
- the carbonation and the wash drastically reduce the emission of heavy metals and anioni. Additives could possibly be added during the treatment, to further reduce this emission.

## Claims

1. A process for treating heavy ash or slag in general, **characterised by** mixing, in the interior of a rotating body, the heavy ash and/or slag and a water quantity in a weight ratio between 0.8 and 2, while simultaneously passing into the rotating body a flow of gaseous CO₂ in a concentration between 90 and 100% v/v for a period not exceeding 2 hours, on termination of the mixing stage the material being passed through at least one screen by which it is separated into ash of diameter greater than 5 mm and a mixture of water and ash with the ash of diameter less than 1 mm, said ash greater than 5 mm being subjected to deferrization treatment, to be then fed to a temporary store, the mixture of water and ash less than 1 mm being subjected to filtration treatment, the filtrate from which consists of a fine fraction of washed and carbonated slag, the water, containing salts washed from the slag and certain heavy metals, being fed to a water purification plant.

2. A process as claimed in claim 1, **characterised by** mixing the slag with water in a weight ratio preferably of 1.

3. A process as claimed in claim 1, **characterised by** using a flow of gaseous CO₂ in a concentration of 95% v/v.

4. A process as claimed in claim 1, **characterised by** carrying out mixing for a period of one hour.

5. A process as claimed in claim 1, **characterised by** using as the gaseous CO₂ that leaving the incinerator stack.

## Patentansprüche

1. Verfahren zum Behandeln von schwerer Asche oder Schlacke im Allgemeinen, **gekennzeichnet durch** Mischen der schweren Asche und/oder Schlacke und einer Menge an Wasser in einem Gewichtsverhältnis zwischen 0,8 und 2 im Inneren eines sich drehenden Körpers, wobei gleichzeitig ein Strom von gasförmigem CO₂ mit einer Konzentration zwischen 90 und 100 % v/v über einen Zeitraum von nicht mehr als 2 Stunden in den sich drehenden Körper geleitet wird, das Material nach Beenden des Mischschritts durch wenigstens ein Sieb geführt wird, **durch** das es in Asche mit einem Durchmesser von mehr als 5 mm und ein Gemisch von Wasser und Asche mit einem Durchmesser der Asche von weniger als 1 mm getrennt wird, die Asche mit mehr als 5 mm einer Enteisenungsbehandlung unterworfen wird, um dann einem Zwischenlager zugeführt zu werden, das Gemisch von Wasser und Asche mit weniger als 1 mm einer Filtrationsbehandlung unterzogen wird, deren Filtrat aus einer Feinfraktion aus gewaschener und karbonisierter Schlacke besteht, wobei das Wasser von der Schlacke gewaschene Salze und bestimmte Schwermetalle enthält, einer Wasserreinigungsanlage zugeführt wird.

2. Verfahren gemäß Anspruch 1, **gekennzeichnet durch** Mischen der Schlacke mit Wasser in einem Gewichtsverhältnis von vorzugsweise 1.

3. Verfahren gemäß Anspruch 1, **gekennzeichnet durch** Verwenden eines Stroms von gasförmigem CO₂ mit einer Konzentration von 95 % v/v.

4. Verfahren gemäß Anspruch 1, **gekennzeichnet durch** Durchführen von Mischen über einen Zeitraum von einer Stunde.

5. Verfahren gemäß Anspruch 1, **gekennzeichnet durch** Verwenden von solchem als das gasförmige CO₂, das einen Verbrennungskamin verlässt.

## Revendications

1. Procédé de traitement de cendres lourdes ou de scories en général, **caractérisé par** le mélange, à l'intérieur d'un corps en rotation, des cendres lourdes et/ou des scories et d'une quantité d'eau dans un rapport pondéral compris entre 0,8 et 2, tout en faisant simultanément passer dans le corps en rotation un courant de CO₂ gazeux à une concentration comprise entre 90 et 100 % v/v pendant une période ne dépassant pas 2 heures, le matériau étant passé à la fin de l'étape de mélange à travers au moins un tamis par lequel il est séparé en cendres de diamètre supérieur à 5 mm et un mélange d'eau et de cendres avec les cendres de diamètre inférieur à 1 mm, lesdites cendres de plus de 5 mm étant soumises à un traitement de déferrisation, pour être ensuite entreposées temporairement, le mélange d'eau et de cendres de moins de 1 mm étant soumis à un traitement de filtration, dont le filtrat consiste en une fraction fine de scories lavées et carbonatées, l'eau, contenant des sels lavés à partir des scories et certains métaux lourds, étant introduite dans une usine de purification d'eau.

2. Procédé selon la revendication 1, **caractérisé par** le mélange des scories avec l'eau dans un rapport pondéral de préférence de 1.

3. Procédé selon la revendication 1, **caractérisé par** l'utilisation d'un courant de CO₂ gazeux à une concentration de 95 % v/v.

4. Procédé selon la revendication 1, **caractérisé par** la réalisation du mélange pendant une période d'une heure.

5. Procédé selon la revendication 1, **caractérisé par** l'utilisation du CO₂ gazeux qui quitte la cheminée de l'incinérateur.
